# EUROPÄISCHE PATENTANMELDUNG

(11) **EP 2 103 713 A1**
(43) Veröffentlichungstag der Anmeldung: **23.09.2009**
(21) Anmeldenummer: 09152707.7
(22) Anmeldetag: 12.02.2009
(51) Int. Cl.: C23C 22/74, C23C 22/83, C09D 5/00, C09D 5/08

(54) **Korrosionsschutzgrundierung**

(30) Priorität: 20.03.2008 DE 102008015213; 07.07.2008 DE 102008031974
(71) Anmelder: Münch Chemie International GmbH, 69469 Weinheim (DE)
(72) Erfinder: Drossmann, Sebastian, 69469 Weinheim (DE); Münch, Michael, 69488 Birkenau (DE)
(74) Vertreter: Meissner, Bolte & Partner

(57) **Zusammenfassung**

Die Erfindung betrifft eine Grundierung mit einem Korrosionsschutz in Form eines Gemisches aus Wasser und/oder Lösungsmittel und weiteren Komponenten zur Standzeitverlängerung und Korrosionsinhibitation bestehend aus
A) funktionellen und/oder nicht funktionellen Silanen und/oder Chloralkylsilanen und/oder Fluoralkylalkoxysilanen
B) organischen und/oder anorganischen Säuren
C) Alkoholen, Ketonen und Estern
D) Wasser,

sowie ein Verfahren zu dessen Herstellung und ein Verfahren zu dessen Verwendung.

## Beschreibung

Die folgende Erfindung beschreibt eine Grundierung und einen Korrosionsschutz in Form eines Gemisches aus Wasser und/oder Lösungsmittel und weiteren Komponenten zum Aufsprühen, Aufpinseln und/oder Eintauchen von sowohl heißen als auch kalten Metalloberflächen.

Nach dem derzeitigen Stand der Technik ist bekannt, dass es auf dem Markt eine Vielzahl von Korrosionsschutzmitteln gibt, deren chemischer Aufbau sich untereinander nicht wesentlich unterscheidet. Die meisten Korrosionsschutzmittel setzen sich, je nach Anwendungsgebiet, entweder aus Mineralölen oder synthetischen Ölen, Lacken oder Metalloxiden zusammen und enthalten meist Kohlenwasserstoffe. Produkte auf Wasserbasis enthalten meistens Derivate der Sulfonsäure sowie Sulfonsäuremetallsalze oder Phosphorsäure sowie Phosphorsäuresalze.

Aus der Praxis ist bekannt, dass Werkzeugformen, nach der Fertigung von Elastomerbauteilen sowie nachfolgender Reinigung, zur Einlagerung mit Korrosionsschutzmittel behandelt werden müssen. Durch die Vielzahl der auf dem Markt befindlichen Korrosionsschutzmittel zeigt sich eine gemeinsame Problematik, nämlich dass die Werkzeugformen nach der Lagerung zunächst vom Korrosionsschutz gereinigt werden müssen, ehe sie wieder zum Einsatz kommen. Dieser Reinigungsvorgang ist sehr kosten- und zeitintensiv, da Reste von Korrosionsschutz Indifferenzen, d. h. eine Wirkungslosigkeit einer nachfolgenden Trennmittelapplikation verursachen und die Fertigung von Elastomerbauteilen somit intensiv negativ beeinflusst. Zudem werden die Standzeiten der eingesetzten Trennmittel soweit herabgesetzt, dass eine Mehrfachapplikation in kurzen Zeitintervallen nötig ist, was wiederum zu Oberflächenverschmutzungen oder Korrosion führen kann. Dies gestaltet sich umso problematischer, wenn aggressive Elastomere, wie zum Beispiel CR (Chloropren-Kautschuk) oder CSM (Chlorsulfoniertes Polyethylen), zum Einsatz kommen, welche die Metalloberfläche schon während des Verarbeitungsprozesses korrodieren lassen und die Lebensdauer der Werkzeuge somit stark verringern.

Auf Grund von chemischen Unverträglichkeiten und der meist nur niedrigen thermischen Stabilität des Korrosionsschutzes bzw. der Korrosionsschutzmittel, ist eine Trennmittelapplikation auf eine Beschichtung aus Korrosionsschutzmittel nach dem derzeitigen Stand der Technik kaum umsetzbar oder bringt eine Vielzahl von Problemen mit sich.

Die Aufgabe der vorliegenden Erfindung ist es daher eine Grundierung und Korrosionsschutz herzustellen, mit welcher/welchem die oben beschriebenen Nachteile und Einschränkungen vermieden werden können.

Insbesondere wird die Aufgabe der vorliegenden Erfindung durch eine Grundierung und einen Korrosionsschutz bestehend aus:
A) funktionellen und/oder nicht funktionellen Silanen und/oder Chloralkylsilanen und/oder Fluoralkylalkoxysilanen
B) organischen und/oder anorganischen Säuren
C) Alkoholen, Ketonen und Estern
D) Wasser
gelöst, wobei die Komponenten A), B), C), und D) vollständig miteinander gemischt werden.

Unter Mischen wird im Rahmen dieser Erfindung die physikalische Herstellung eines homogenen Gemisches bei Raumtemperatur und ohne Zusatzheizung verstanden.

Überraschend wurde erfindungsgemäß gefunden, dass eine Grundierung und ein damit erfindungsgemäß einhergehender Korrosionsschutz, bestehend aus einer Mischung von funktionellen und/oder nicht funktionellen Silanen und/oder Chloralkylsilanen und/oder Fluoralkylalkoxysilanen, organischen und/oder anorganischen Säuren, Alkoholen, Ketonen und/oder Estern mit Wasser, eine auf der Metalloberfläche haftende Grundierung und einen gleichzeitigen Korrosionsschutz bewirkt.

Erfindungsgemäß werden die Komponenten A), B), C), und D) in Form von Reinstoffen und/oder flüssigen Lösungen und/oder flüssigen Dispersionen und/oder Mischungen davon verwendet.

Bei der erfindungsgemäßen Grundierung und dem sich daraus ergebenden Korrosionsschutz werden die Komponenten A), B), C) und D) im Gewichtsverhältnis 0,03-23,7 : 0,02-20,9 : 0,4-32,3 : 99,55-23,1 Gew.-%, im bevorzugtem Fall 1,04-6,7 : 2,7-4,9 : 2,1-5,8 : 94,16-82,6 Gew.-% und im besonders bevorzugtem Fall 3,72-10,9 : 5,82-14,3 : 6,91-21,9 : 83,55-52,9 Gew.-% betragen, wobei die Summe der genannten Komponenten im Mischungsverhältnis immer 100 Gew.-% ergibt.

Die funktionellen und/oder nicht funktionellen Silane und/oder Chloralkylsilane und/oder Fluoralkylalkoxysilane A) gemäß einer Ausführungsform der Grundierung und des Korrosionsschutzes sind ausgewählt aus der Gruppe der funktionellen Alkyltrialkoxysilane, mit Amino-, Methacryl-, Vinyl-, Isocyanato- und/oder Glycidoxy-funktioneller Gruppe und/oder der nicht funktionellen Alkyltrialkoxysilane und/oder Aryltrialkoxysilane und/oder der Chloralkylsilane und/oder Chloralkyltrialkoxysilane, wie Trichlormethylsilan, Dichlordimethylsilan und/oder Chlortrimethylsilan und/oder der Fluoralkyltrialkoxysilane, wie 1H,1H,2H,2H-Tridecafluoro-n-octyltriethoxysilan; wobei Alkoxy = Methoxy und/oder Ethoxy, Aryl = Phenyl C₆H₅-, Alkyl = CₙH₂ₙ₊₂; und/oder Mischungen davon sind.

Die funktionellen und/oder nicht funktionellen Alkyltrialkoxysilane und/oder Aryltrialkoxysilane und/oder Chloralkylsilane und/oder Fluoralkylalkoxysilane A) gemäß einer Ausführungsform der Grundierung und des Korrosionsschutzes liegen als Reinstoff und/oder lösemittelhaltige Lösung, besonders bevorzugt als wässrige Lösung vor.

Die organischen und/oder anorganischen Säuren B) gemäß einer Ausführungsform der Grundierung und des Korrosionsschutzes sind ausgewählt aus der Gruppe organischer Säuren, wie gesättigten, ungesättigten und/oder aromatischen Monocarbonsäuren, Dicarbonsäuren und/oder Tricarbonsäuren und/oder Hydroxydicarbonsäuren und/oder Dihydroxydicarbonsäuren, aus der Gruppe anorganischer Säuren, wie Chlorwasserstoffsäure, Bromwasserstoffsäure, Iodwasserstoffsäure, Schwefelsäure, Schweflige Säure, Salpetersäure, Salpetrige Säure, Orthophosphorsäure, Diphosphorsäure, Metaphosphorsäure, Polyphosphorsäure und/oder Perchlorsäure und/oder Periodsäure und/oder Mischungen davon.

Die Alkohole, Ketone und/oder Ester C) gemäß einer Ausführungsform der Grundierung und des Korrosionsschutzes sind ausgewählt aus der Gruppe primärer Alkohole, sekundärer Alkohole, tertiärer Alkohole, primärer Alkandiole, sekundärer Alkandiole, Polyalkohole, aus der Gruppe der Ketone, wie Alkylketone und/oder Arylketone, Diketone, aus der Gruppe der Ester, wie Carbonsäuremonoalkylester, Dicarbonsäuredialkylester, Dicarbonsäuremonoalkylester, Lactone und/oder Lactame und/oder Mischungen davon.

Die Komponenten D) gemäß einer Ausführungsform der Grundierung und des damit einhergehenden Korrosionsschutzes sind ausgewählt aus der Gruppe entsprechend Anspruch 8, nämlich aus der Gruppe primärer Alkohole, sekundärer Alkohole, tertiärer Alkohole, primärer Alkandiole, sekundärer Alkandiole, Polyalkohole, aus der Gruppe der Ketone, wie Alkylketone und/oder Arylketone, Diketone, aus der Gruppe der Ester, wie Carbonsäuremonoalkylester, Dicarbonsäuredialkylester, Dicarbonsäuremonoalkylester, Lactone und/oder Lactame und/oder Mischungen davon.

Nachfolgend wird die Erfindung anhand von nicht einschränkenden Ausführungsbeispielen näher beschrieben.

### Beispiel 1

In einem 500 ml Becherglas wurden zunächst 56,93 g demineralisiertes Wasser und 23,90 g 1,2-Ethandiol vollständig miteinander vermischt. Im Anschluss wurde der Lösung 12,45 g N-(2-Aminoethyl)-3-aminopropyltrimethoxysilan zugesetzt und für 60 Minuten bei Raumtemperatur gerührt. Danach wurde 6,72 g 98 %ige Ameisensäure zugegeben und für weitere 30 Minuten gerührt. Die klare, leicht gelbliche Lösung wurde anschließend auf ein gesäubertes, poliertes und planes Stahlplattenpaar mit den Maßen 100 x 1006 mm bei 180°C einmalig appliziert.

Diese somit erhaltene Grundierung sowie der sich daraus ergebende Korrosionsschutz wurde nachfolgend bei 180°C einmalig mit wässrigem silikonhaltigem Trennmittel besprüht und auf seine Standzeitverlängerung sowie korrosionsinhibierende Wirkung hin mit den Elastomeren CSM (Chlorsulfoniertes Polyethylen) und CR (Chloropren-Kautschuk) getestet, in dem mit einer Laborpresse solange gepresst (Zyklen) wurde, bis keine Trennung mehr festgestellt werden konnte. Parallel dazu wurde die korrosionsinhibierende Wirkung überprüft. Als Referenz wurde jeweils eine Probe ohne Grundierung und Korrosionsschutz verwendet.

Die hierbei erzielte Standzeitverlängerung mit Grundierung und Korrosionsschutz gemäß Beispiel 1 betrug bei CSM 37 Zyklen und bei CR 31 Zyklen bei gesamt 150 gefahrenen Zyklen beider Elastomere. Zudem wiesen beide Proben bis 150 Zyklen keine Korrosion auf. Die Referenz zeigte bei CSM 113 Zyklen und bei CR 119 Zyklen, wobei beide Proben ab rund 95 Zyklen leichte Korrosion aufwiesen.

### Beispiel 2

In einem 500 ml Becherglas wurden zunächst 74,51 g demineralisiertes Wasser, 10,0 g Propan-2-ol, 4,77 g 75 %ige Orthophosphorsäure sowie 1,02 g 99 - 100 %ige Essigsäure vollständig miteinander vermischt. Im Anschluss wurde der Lösung zunächst 4,35 g 3-Aminopropyltriethoxysilan sowie 5,27 g N-(2-Aminoethyl-3-aminopropyl)-methyldimethoxysilan unter ständigem Rühren zugesetzt und für weitere 60 Minuten bei Raumtemperatur gerührt. Danach wurde 0,08 g 3-Glycidyloxypropyltriethoxysilan zugesetzt, für zehn Minuten gerührt und die klare Lösung anschließend auf ein gesäubertes, poliertes und planes Stahlplattenpaar mit den Maßen 100 x 1006 mm bei 180°C einmalig appliziert.

Diese somit erhaltene Grundierung und der daraus resultierende Korrosionsschutz wurde nachfolgend bei 180°C einmalig mit wässrigem silikonhaltigem Trennmittel besprüht und auf seine Standzeitverlängerung sowie korrosionsinhibierende Wirkung hin mit den Elastomeren CSM (Chlorsulfoniertes Polyethylen) und CR (Chloropren-Kautschuk) getestet, in dem mit einer Laborpresse solange gepresst (Zyklen) wurde, bis keine Trennung mehr festgestellt werden konnte. Parallel dazu wurde die korrosionsinhibierende Wirkung überprüft. Als Referenz wurde jeweils eine Probe ohne Grundierung und Korrosionsschutz verwendet.

Die hierbei erzielte Standzeitverlängerung mit Grundierung und Korrosionsschutz gemäß Beispiel 2 betrug bei CSM 67 Zyklen und bei CR 61 Zyklen bei gesamt 180 gefahrenen Zyklen beider Elastomere. Zudem wiesen beide Proben bis 180 Zyklen keine Korrosion auf. Die Referenz zeigte bei CSM 115 Zyklen und bei CR 119 Zyklen, wobei beide Proben ab rund 96 Zyklen leichte Korrosion aufwiesen.

| **Komponenten in (g)** | **Beispiele** | | | |
|---|---|---|---|---|
| | **3** | **4** | **5** | **6** |
| Methyltrimethoxysilan | 2,51 | | | 1,21 |
| N-(3-(Trimethoxysilyl)-propyl)-ethylendiamin | | 2,64 | | 3,48 |
| N-Cyclohexyl-3-aminopropyltrimethoxysilan | 0,52 | | | |
| Dicyclopentyldimethoxysilan | | | 4,87 | |
| 3-Methacryloxypropyltriacetoxysilan | | 2,85 | | |
| Propan-2-ol | 12,80 | | 2,0 | |
| 1,2-Ethandiol | 10,50 | | | |
| 1,2-Propandiol | | 10,50 | 10,5 | |
| Orthophosphorsäure | | | | |
| | 1,05 | 2,03 | | |
| 75%ig | | | | |
| Ameisensäure 98%ig | 2,04 | | | 2,09 |
| Essigsäure 99-100%ig | | 2,01 | | |
| Wasser demineral. | 70,58 | 79,97 | 82,63 | 93,22 |
| Applikation: | 1x | 1x | 1x | 1x |
| Presswerkzeug: | Stahl | Stahl | Stahl | Stahl |
| Trennmittel: | silikonhaltig | silikonhaltig | silikonfrei | silikonfrei |
| Temperatur: | 180°C | 180°C | 180°C | 180°C |
| Elastomermischung: | CSM | CR | CSM | CR |
| Standzeitverlängerung | | | | |
| | 55 | 68 | 71 | 47 |
| (Zyklen) : | | | | |
| Korrosion: | keine | keine | keine | keine |

| | | | | |
|---|---|---|---|---|
| CR*: Chloropren-Kautschuk CSM*: Chlorsulfoniertes Polyethylen | | | | |

In sämtlichen Beispielen konnte gezeigt werden, dass die erfindungsgemäße Grundierung und Korrosionsschutz zur Standzeitverlängerung und Korrosionsinhibierung von verschiedenen Elastomeren zu herkömmlichen Korrosionsschutzmitteln gemäß dem Stand der Technik überlegen ist und zu sehr guten Ergebnissen führt.

An dieser Stelle sei darauf hingewiesen, dass alle oben genannten Teile für sich alleine gesehen und in jeder Kombination als erfindungswesentlich beansprucht werden. Abänderungen hiervon sind dem Fachmann geläufig.

## Patentansprüche

1. Grundierung und Korrosionsschutz in Form eines Gemisches aus Wasser und/oder Lösungsmittel und weiteren Komponenten zur Standzeitverlängerung und Korrosionsinhibitation bestehend aus
A) funktionellen und/oder nicht funktionellen Silanen und/oder Chloralkylsilanen und/oder Fluoralkylalkoxysilanen
B) organischen und/oder anorganischen Säuren
C) Alkoholen, Ketonen und Estern
D) Wasser.

2. Grundierung und Korrosionsschutz nach Anspruch 1,
**dadurch gekennzeichnet, dass**
die Komponenten A), B), C) und D) im Gewichtsverhältnis
0,03-23,7 : 0,02-20,9 : 0,4-32,3 : 99,55-23,1 Gew.-%, im bevorzugtem Fall 1,04-6,7 : 2,7-4,9 : 2,1-5,8 : 94,16-82,6 Gew.-% und im besonders bevorzugtem Fall 3,72-10,9 : 5,82-14,3 : 6,91-21,9 : 83,55-52,9 Gew.-% betragen, wobei die Summe der Komponenten im Mischungsverhältnis immer 100 Gew.-% ergibt.

3. Grundierung und Korrosionsschutz nach Anspruch 1,
**dadurch gekennzeichnet, dass**
die Komponenten A), B), C) und D) vollständig miteinander vermischt sind.

4. Grundierung und Korrosionsschutz nach Anspruch 1,
**dadurch gekennzeichnet, dass**
die Komponenten A), B), C) und D) in Form von Reinstoffen und/oder flüssigen Lösungen und/oder flüssigen Dispersionen und/oder Mischungen davon eingesetzt sind.

5. Grundierung und Korrosionsschutz nach Anspruch 1,
**dadurch gekennzeichnet, dass**
die Komponenten A) ausgewählt sind aus der Gruppe der funktionellen Alkyltrialkoxysilane, mit Amino-, Methacryl-, Vinyl-, Isocyanato- und/oder Glycidoxy-funktioneller Gruppe und/oder der nicht funktionellen Alkyltrialkoxysilane und/oder Aryltrialkoxysilane und/oder der Chloralkylsilane und/oder Chloralkyltrialkoxysilane, wie Trichlormethylsilan, Dichlordimethylsilan und/oder Chlortrimethylsilan und/oder der Fluoralkyltrialkoxysilane, wie 1H,1H,2H,2H-Tridecafluoro-n-octyltriethoxysilan; wobei Alkoxy = Methoxy und/oder Ethoxy, Aryl = Phenyl C₆H₅-, Alkyl = CₙH₂ₙ₊₂; und/oder Mischungen davon.

6. Grundierung und Korrosionsschutz nach Anspruch 1,
**dadurch gekennzeichnet, dass**
die funktionellen und/oder nicht funktionellen Alkyltrialkoxysilane und/oder Aryltrialkoxysilane und/oder Chloralkylsilane und/oder Fluoralkylalkoxysilane vor der Mischung als Reinstoff und/oder lösemittelhaltige Lösung, besonders bevorzugt als wässrige Lösung vorliegen.

7. Grundierung und Korrosionsschutz nach Anspruch 1,
**dadurch gekennzeichnet, dass**
die Komponenten B) ausgewählt sind aus der Gruppe der organischer Säuren, wie gesättigten, ungesättigten und/oder aromatischen Monocarbonsäuren, Dicarbonsäuren und/oder Tricarbonsäuren und/oder Hydroxydicarbonsäuren und/oder Dihydroxydicarbonsäuren, aus der Gruppe anorganischer Säuren, wie Chlorwasserstoffsäure, Bromwasserstoffsäure, Iodwasserstoffsäure, Schwefelsäure, Schweflige Säure, Salpetersäure, Salpetrige Säure, Orthophosphorsäure, Diphosphorsäure, Metaphosphorsäure, Polyphosphorsäure und/oder Perchlorsäure und/oder Periodsäure und/oder Mischungen davon.

8. Grundierung und Korrosionsschutz nach Anspruch 1,
**dadurch gekennzeichnet, dass**
die Komponenten C) ausgewählt sind aus der Gruppe primärer Alkohole, sekundärer Alkohole, tertiärer Alkohole, primärer Alkandiole, sekundärer Alkandiole, Polyalkohole, aus der Gruppe der Ketone, wie Alkylketone und/oder Arylketone, Diketone, aus der Gruppe der Ester, wie Carbonsäuremonoalkylester, Dicarbonsäuredialkylester, Dicarbonsäuremonoalkylester, Lactone und/oder Lactame und/oder Mischungen davon.

9. Grundierung und Korrosionsschutz nach Anspruch 1,
**dadurch gekennzeichnet, dass**
die Komponenten D) aus folgendem besteht: aus demineralisiertem Wasser und/oder ausgewählt sind aus der Gruppe primärer Alkohole, sekundärer Alkohole, tertiärer Alkohole, primärer Alkandiole, sekundärer Alkandiole, Polyalkohole, aus der Gruppe der Ketone, wie Alkylketone und/oder Arylketone, Diketone, aus der Gruppe der Ester, wie Carbonsäuremonoalkylester, Dicarbonsäuredialkylester, Dicarbonsäuremonoalkylester, Lactone und/oder Lactame und/oder Mischungen davon.

10. Verfahren zum Herstellen einer Grundierung und Korrosionsschutz gemäß einem der Ansprüche 1 bis 9,
**dadurch gekennzeichnet, dass**
die Komponenten A), B), C) und D) miteinander vermischt werden.

11. Verwendung einer Grundierung und Korrosionsschutz gemäß einem der Ansprüche 1 bis 10 zum Aufsprühen, Aufpinseln und/oder Eintauchen von sowohl heißen als auch kalten Metalloberflächen.
